Europäisches Patentamt

European Patent Office

Office européen des brevets

(11) Veröffentlichungsnummer : **0 057 852**
**B1**

(12) **EUROPÄISCHE PATENTSCHRIFT**

(45) Veröffentlichungstag der Patentschrift :
13.06.84

(21) Anmeldenummer : 82100548.5

(22) Anmeldetag : 27.01.82

(51) Int. Cl.³ : **H 04 M   1/64, H 04 M   3/50**

(54) Automatischer Anrufbeantworter für Nebenstellen-Anlagen.

(30) Priorität : **10.02.81 DE 3104565**

(43) Veröffentlichungstag der Anmeldung :
**18.08.82 Patentblatt 82/33**

(45) Bekanntmachung des Hinweises auf die Patenterteilung : **13.06.84 Patentblatt 84/24**

(84) Benannte Vertragsstaaten :
**AT BE CH GB LI NL SE**

(56) Entgegenhaltungen :
**DE-A- 2 525 025**
**DE-A- 2 853 355**
**DE-A- 2 854 401**
**US-A- 4 049 915**
**US-A- 4 150 255**

(73) Patentinhaber : **Neumann Elektronik GmbH**
**Bülowstrasse 104 - 110**
**D-4330 Mülheim 1 (DE)**

(72) Erfinder : **Neumann, Dirk, Dipl.-Ing.**
**Schemelsbruch 11**
**D-4330 Mülheim 1 (DE)**

(74) Vertreter : **Feder, Heinz, Dr. et al**
**Dominikanerstrasse 37**
**D-4000 Düsseldorf 11 (DE)**

## Beschreibung

Die Erfindung betrifft einen automatischen Anrufbeantworter für Nebenstellen-Anlagen zur Abgabe mindestens eines vorgegebenen Ansagetextes in die Fernsprechleitung mit einer, einen Mikroprozessor enthaltenden Steuervorrichtung und einem elektronischen Textgeber zur Abgabe von in digitaler Form in Festwertspeichern gespeicherten Textteilen, wobei ein Ansagetext jeweils aus fest vorgegebenen Textteilen und aus variablen, aus Ziffern bestehenden, in die fest vorgegebenen Textteile einfügbaren Textteilen zusammengesetzt ist.

Es sind automatische Anrufbeantworter (DE-A-28 54 401 und DE-B-28 54 516), bei denen ein Ansagetext, der bei Anruf in die Fernsprechleitung abgegeben werden soll, vorher vom Benutzer aufgesprochen werden muß, wobei das analoge Sprachsignal des aufgesprochenen Textes mittels eines Analog-Digitalwandlers, der beispielsweise nach dem bekannten Delta-Modulationsverfahren arbeiten kann, in ein digitales Sprachsignal umgewandelt wird, das in einem Festwertspeicher gespeichert wird und bei Bedarf mittels eines Digital-Analogwandlers als analoges Sprachsignal wieder abgegeben wird.

Diese bekannten Anrufbeantworter haben den Nachteil, daß der abzugebende Ansagetext vorher vom Benutzer aufgesprochen werden muß, was für viele sprachlich wenig geschulte Benutzer eine große Unbequemlichkeit darstellt. Außerdem sind derartige Anrufbeantworter sehr aufwendig, sobald sie in Nebenstellen-Anlagen eingesetzt werden müssen und die verschiedene Teilnehmer-Anschlüsse der Nebenstellen-Anlage betreffenden Anrufe beantwortet werden sollen. Es müßte dann entweder für jede Nebenstelle ein eigener kompletter Anrufbeantworter vorhanden sein, oder es müßten in einer zentralen Anlage eine größere Anzahl ständig wechselnder aufgesprochener Texte zur Verfügung stehen.

Es ist weiterhin ein Anrufbeantworter bekannt (DE-A-28 53 355), bei dem zusätzlich zu dem aufgesprochenen Ansagetext ein fest eingespeicherter Text abgegeben wird, der aus fest vorgegebenen Textteilen und aus variablen, aus Ziffern bestehenden, in die fest vorgegebenen Textteile einfügbaren Textteilen zusammengesetzt ist. Bei diesem bekannten Anrufbeantworter ist der fest eingespeicherte Text in digitaler Form in einen Festwertspeicher eingespeichert, und die Zusammensetzung der Textteile erfolgt mittels eines mikroprozessorgesteuerten elektronischen Textgebers. Der fest eingespeicherte Text besteht aus einer Zeitangabe, um für den Benutzer den Zeitpunkt eines aufgezeichneten Anrufes festzuhalten. Auch dieser bekannte Anrufbeantworter weist jedoch den Nachteil auf, daß der die Information für den Anrufer enthaltende Text vom Benutzer eigens aufgesprochen werden muß. Außerdem wäre auch bei diesem bekannten Anrufbeantworter der Aufwand bei seiner Anwendung bei einer Nebenstellen-Anlage beträchtlich.

Es sind weiterhin elektronische Textgeber bekannt, mit denen eine größere Anzahl von Ansagetexten abgegeben werden kann, die aus verschiedenen fest eingespeicherten Textteilen unterschiedlicher zeitlicher Länge zusammensetzbar sind. Die Textteile können z. B. von einem geschulten Sprecher aufgesprochen sein und sind in Festwertspeichern festgehalten. Die Steuerung des Textgebers kann von einer Datenverarbeitungsanlage, beispielsweise einem Mikrocomputer, aus erfolgen.

Die Erfindung geht von der Erkenntnis aus, daß sich in größeren Unternehmen oder Behörden stets ein Teil der Mitarbeiter für längere Zeit nicht an seinem Arbeitsplatz befindet. Die Gründe hierfür können Urlaub, Dienstreisen, Krankheit, Besprechungen in einem anderen Raum oder dergleichen sein. In derartigen Fällen ist unter der Rufnummer eines Mitarbeiters oftmals niemand zu erreichen. Die Vertretung sitzt nicht im gleichen Raum, sondern ist unter einer anderen Rufnummer zu erreichen. Dieser Umstand führt, vor allen Dingen bei Nebenstellen-Anlagen mit Durchwahl, zu erhöhtem Zeitaufwand and zu höheren Kosten beim Anrufenden. Auch ein Anruf bei der Vermittlung führt oft erst nach mehrmaligen Rückfragen zum richtigen Teilnehmer.

Die der Erfindung zugrunde liegende Aufgabe bestand darin, einen automatischen Anrufbeantworter für Nebenstellen-Anlagen der eingangs erwähnten Art zu schaffen, bei dem mit möglichst geringem Aufwand auch für größere Nebenstellen-Anlagen eine zuverlässige Beantwortung für die verschiedenen Teilnehmer-Anschlüsse der Nebenstellen-Anlage eingehenden Anrufe möglich ist.

Der Grundgedanke der Lösung besteht darin, einen Anrufbeantworter zu schaffen, der dem Anrufenden jeweils mitteilt, welche andere Rufnummer er wählen muß. Eine dezentrale Lösung, d. h. je ein Anrufbeantworter pro Teilnehmer, führt, vor allem bei größeren Anlagen, zu einem sehr großen Aufwand, wobei die einzelnen Geräte den größten Teil der Zeit, nämlich dem Teil, an dem sich der Mitarbeiter an seinem Platz befindet, unbenutzt wären.

Die Lösung der oben angegebenen Aufgabe erfolgt erfindungsgemäß dadurch, daß für eine vorgegebene Anzahl von Nebenstellen die gemeinsame Steuervorrichtung und der elektronische Textgeber in der Zentrale der Nebenstellen-Anlage vorgesehen sind, sowie mindestens eine, an jeweils einen Teilnehmer-Anschluß der vorgegebenen Nebenstellen anschließbare Interface-Baugruppe, die mit der Steuervorrichtung (1) und dem Textgeber (2) verbunden ist, und jeweils vorrichtungen zur Vorgabe (V) eines der variablen Textteile an den Textgeber (2) sowie Vorrichtungen zur Ruferkennung (R) und zur darauffolgenden Anschaltung des Textgebers an den Teilnehmer-Anschluß (S1, S2) aufweist. Vorteilhafte Ausführungsformen sind Gegenstand der Unteransprüche.

Die erfindungsgemäße Lösung macht es möglich, von einer zentralen Anrufbeantworter-Anlage aus eine größere Anzahl von Teilnehmer-Anschlüssen auf den Anrufbeantworter zu schalten. Dabei braucht die Anzahl der Interface-Baugruppen grundsätzlich nicht der Gesamtanzahl der vorhandenen Nebenstellen zu entsprechen, sondern die Anlage kann je nach Bedarf ausgelegt sein, und es werden jeweils die nicht besetzten Nebenstellen mit dem Anrufbeantworter verbunden, wenn dies erforderlich erscheint.

An jeder der Interface-Baugruppen kann in Ziffern eine Ausweichrufnummer vorgegeben werden, die dann bei der Abgabe des Ansagetextes vom elektronischen Textgeber als variabler Textteil in den fest vorgegebenen Textteil eingefügt wird.

So kann der Ansagetext beispielsweise lauten : « Dieser Anschluss ist zur Zeit nicht besetzt, bitte rufen Sie folgende Rufnummer an : .... » Es folgt dann die Rufnummer in Form der vorgegebenen Ziffern.

Bei größeren Anlagen, bei denen mit dem Eintreffen von mehreren Anrufen kurz hintereinander gerechnet werden muß, sind Ausführungsformen nach den Ansprüchen 2 oder 3 vorteilhaft. Bei diesen Ausführungsformen werden Anrufe, die eingehen, während bereits ein Ansagetext abgegeben wird, gespeichert, wobei für eine vorgegebene erste Anzahl von eingehenden Rufen die Vorrichtung zur Abgabe einer Endlosansage in Funktion tritt, die beispielsweise den Text « Bitte warten » abgibt. Muß damit gerechnet werden, daß innerhalb kurzer Zeit eine größere Anzahl von Anrufen für nicht besetzte Teilnehmer-Anschlüsse kommt, so daß unter Umständen bei einer Speicherung der Rufe und Abgabe des Ansagetextes « Bitte warten » für den Anrufer längere Wartezeiten auftreten könnten, die bei Ferngesprächen kostspielig werden können, so kann es auch zweckmäßig sein, die Anlage so auszubilden, daß für einen Teil der zuletzt eingegangenen Rufe gemäß Anspruch 3 die Schleife des Teilnehmer-Anschlusses geöffnet bleibt, wobei es dem Anrufer überlassen bleibt, mehrere Rufsignale abzuwarten, bis schließlich nach der Abfertigung einiger vorhergehender Rufe der Text « Bitte warten » und schließlich der Ansagetext mit der Ausweichrufnummer ertönen, oder aber er versucht den Anruf zu einem späteren Zeitpunkt noch einmal.

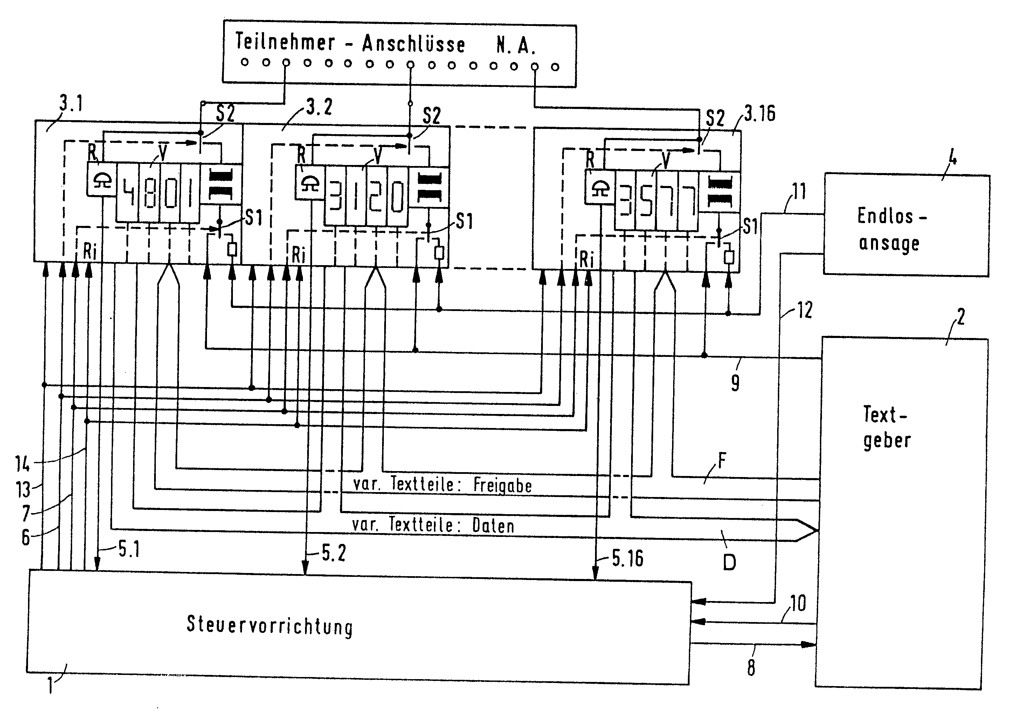

Im folgenden wird anhand der beigefügten Zeichnung ein Ausführungsbeispiel für den erfindungsgemäßen Anrufbeantworter näher erläutert.

In der Zeichnung ist in einem Blockschaltbild ein Anrufbeantworter für eine Nebenstellen-Anlage dargestellt, bei der bis zu 16 Teilnehmer-Anschlüsse mit dem Anrufbeantworter verbunden werden können.

Der Anrufbeantworter ist in der Zentrale der Nebenstellen-Anlage angeordnet und enthält einen elektronischen Textgeber 2, der in an sich bekannter Weise aufgebaut sein kann. Dieser elektronische Textgeber 2 kann beispielsweise als fest vorgegebenen Textteil des Ansagetextes den Satz enthalten : « Dieser Anschluß ist zur Zeit nicht besetzt, bitte rufen Sie folgende Rufnummer an ».

Der elektronische Textgeber kann auch so aufgebaut sein, wie dies in den europäischen Patentanmeldungen 82 100549.3 (EP-A-0 057 853) (Elektronischer Textgeber zur Abgabe von Kurztexten) sowie 82 100 550.1 (EP-A-0 057 854) (Automatischer Anrufbeantworter), beide eingereicht am 27.1.1982, beschrieben ist.

Weiterhin enthält die Anlage insgesamt 16 Interface-Baugruppen 3.1-3.16, von denen aus Platzgründen in der Zeichnung nur die Baugruppen 3.1, 3.2 und 3.16 dargestellt sind. Zwischen den Baugruppen 3.2 und 3.16 sind in nicht dargestellter und leicht zu ergänzender Weise die Baugruppen 3.3 bis 3.15 angeordnet.

Jede der Interface-Baugruppen 3.1 bis 3.16 enthält eine Vorrichtung R zur Erkennung eines eingehenden Rufes, eine Vorrichtung V zur Vorgabe einer im gewählten Beispiel aus vier Ziffern bestehenden Ausweichrufnummer. Diese Vorrichtung kann in an sich bekannter Weise aufgebaut sein. Es können hier elektronische Schaltvorrichtungen verwendet werden. Es kann aber auch für jeden einer frei vorgebbaren Ziffer entsprechenden Textteil ein mechanisch gesteuerter Vorwahlschalter mit mehreren, beispielsweise zehn Schaltstellungen vorhanden sein. Derartige Vorwahlschalter sind an sich bekannt. Ihre Verwendung bei einem Anrufbeantworter ist in der obengenannten europäischen Patentanmeldung 82 100 550.1 (EP-A-0 057 584) beschrieben.

Selbstverständlich kann die Vorrichtung zur Vorgabe der Ausweichrufnummer auch so ausgelegt sein, daß sie die Abgabe von Rufnummern mit weniger oder mehr als vier Ziffern ermöglicht.

Weiterhin enthält jede Interface-Baugruppe 3.1 bis 3.16 Schaltvorrichtungen S1 und S2, mit denen bei einem eingehenden Ruf einerseits die Schleife geschlossen werden kann (S2), und andererseits der Teilnehmer-Anschluß an den elektronischen Textgeber 2 angeschlossen werden kann (S1).

Weiterhin ist fin der Anlage eine Vorrichtung 4 zur Abgabe einer Endlosansage, beispielsweise « Bitte warten », vorhanden.

Die Steuerung der Gesamtanlage erfolgt von einer Steuervorrichtung 1 aus, die in nicht eigens dargestellter Weise einen Mikrocomputer enthält.

Die Steuervorrichtung 1 ist über Leitungen 5.1 bis 5.16 mit jeweils einer der Interface-Baugruppen 3.1 bis 3.16 verbunden. Über diese Leitungen werden die eingehenden Rufe von den Vorrichtungen R der Steuervorrichtung 1 zugeführt. Weiterhin sind die Interface-Baugruppen 3.1 bis 3.16 über Steuerleitungen 6, 7, 13 und 14 mit der Steuervorrichtung über Leitungen 9 sowie BUS-Leitungen F, D mit dem elektronischen Textgeber 2 und über Leitungen 11 mit der Vorrichtung zur Endlosansage 4 verbunden. Letztere ist über eine Leitung 12 mit der Steuervorrichtung 1 verbunden. Der elektronische Textgeber 2 ist mit der Steuervorrichtung über die Leitungen 8 und 10 verbunden.

Die Funktion der oben beschriebenen Anlage geschieht folgendermassen :

Die in den Interface-Baugruppen 3.1 bis 3.16 enthaltene Vorrichtung R zur Ruferkennung entspricht dem Wecker des Fernsprechapparates. Nach Erkennen einer an der Baugruppe einstellbaren Anzahl von Rufen, beispielsweise des zweiten oder dritten Rufes, wird über eine der Leitungen 5.1 bis 5.16 ein Anrufsignal an die Steuervorrichtung 1 abgegeben. Die Anrufe werden in der Reihenfolge ihres Eintreffens von der Steuervorrichtung 1 gespeichert.

Ist der elektronische Textgeber 2 im Augenblick des Eintreffens eines Anrufes nicht belegt, wird die Interface-Baugruppe, die als erste einen Anruf gemeldet hat, mittels der Schaltvorrichtung S1 über die Leitung 9 an den Textgeber 2 geschaltet. Gleichzeitig wird durch den Schalter S2 die Teilnehmerschleife geschlossen. Vom Textgeber 2 aus werden die eingestellten variablen Textteile dieser Interface-Baugruppe über die Leitung F freigegeben und die entsprechenden Daten über die Leitung D abgefragt. Über die Leitung 8 wird dem Textgeber 2 ein Startsignal gegeben und es wird beispielsweise im Falle eines Anschlusses der Interface-Baugruppe 3.1 in die Fernsprechleitung der Ansagetext abgegeben : Dieser Anschluß ist zur Zeit nicht besetzt, bitte rufen Sie folgende Rufnummer an : « Vier-acht-null-eins ».

Erfolgt in der Zeit, in der der Ansagetext in die Fernsprechleitung abgegeben wird, ein weiterer Anruf, der beispielsweise von der Vorrichtung zur Ruferkennung R der Interface-Baugruppe 3.2 erkannt und über die Leitung 5.2 der Steuervorrichtung 1 gemeldet wird, so wird, da die Steuervorrichtung 1 inzwischen über die Leitung 10 ein Belegtsignal von dem Textgeber 2 erhält, diese Interface-Baugruppe 3.2 über die Schaltvorrichtung S1 und die Leitung 11 an die Vorrichtung zur Endlosansage 4 angeschaltet.

Dieser Anrufer hört nunmehr die Ansage « Bitte warten ».

Die Anlage ist so ausgelegt, daß das gleiche auch mit dem dritten, an einer der Interface-Baugruppen eintreffenden Anruf geschieht.

Von allen folgenden Anrufen wird jeweils nur die Nummer der betreffenden Interface-Baugruppe, von der ein Anruf gemeldet wurde, in der Steuervorrichtung 1 gespeichert. Die Teilnehmerschleife wird jedoch nicht geschlossen, um für den Anrufenden unnötige Gebühren zu vermeiden. Die Wartezeit auf die Ansage mit der zugehörigen Ausweich-Rufnummer könnte nämlich in diesem Falle mehr als 25 Sekunden betragen.

Wenn der Textgeber 2 seine Ansage beendet hat, wird die Teilnehmerschleife von der Steuervorrichtung 1 aus über die Leitung 14 geöffnet. Alle noch gespeicherten Anrufe rücken im Abarbeitungszyklus der Steuervorrichtung 1 um eine Stelle nach vorn.

Der ursprünglich an zweiter Stelle stehende Anruf wird von der Vorrichtung 4 zur Abgabe der Endlosansage durch die Schaltvorrichtung S1 an den Textgeber 2 umgeschaltet, und der Anrufende hört nun beispielsweise einen Ansagetext, mit der an der Interface-Baugruppe 3.2 vorgegebenen Ausweich-Rufnummer : « Drei-eins-zweinull ».

Der an der dritten Stelle gespeicherte Anruf rückt an die zweite Stelle vor. Für diesen Anrufenden ergibt sich keine Änderung. Die entsprechende Interface-Baugruppe bleibt an die Vorrichtung 4 zur Endlosansage angeschaltet, und der Anrufer hört die Ansage « Bitte warten ».

Für die im Abarbeitungszyklus der Steuervorrichtung 1 ursprünglich zwischen der 4. und der 16. Stelle stehenden Anrufe werden die entsprechenden Interface-Baugruppen von der Steuervorrichtung 1 aus laufend über die Leitung 13 abgefragt, um festzustellen, ob die Anrufe noch anstehen und die Anrufer nicht inzwischen aufgelegt haben. Stehen noch weitere Anrufe an, so wird jeweils die dem nächsten Anruf entsprechende Interface-Baugruppe mit der Vorrichtung 4 zur Abgabe der Endlosansage verbunden.

## Ansprüche

1. Automatischer Anrufbeantworter für Nebenstellen-Anlagen zur Abgabe mindestens eines vorgegebenen Ansagetextes in die Fernsprechleitung mit einer, einen Mikroprozessor enthaltenden Steuervorrichtung (1) und einem elektronischen Textgeber (2) zur Abgabe von in digitaler Form in Festwertspeichern gespeicherten Textteilen, wobei ein Ansagetext jeweils aus fest vorgegebenen Textteilen und aus variablen, aus Ziffern bestehenden, in die fest vorgegebenen Textteile einfügbaren Textteilen zusammengesetzt ist, dadurch gekennzeichnet, daß für eine vorgegebene Anzahl von Nebenstellen die gemeinsame Steuervorrichtung (1) und der elektronische Textgeber (2) in der Zentrale der Nebenstellen-Anlage vorgesehen sind, sowie mindestens eine, an jeweils einen Teilnehmer-Anschluß der vorgegebenen Nebenstellen anschließbare Interface-Baugruppe (3.1.-3.16), die mit der Steuervorrichtung (1) und dem Textgeber (2) verbunden ist, und jeweils Vorrichtungen zur Vorgabe (V) eines der variablen Textteile an den Textgeber (2) sowie Vorrichtungen zur Ruferkennung (R) und zur darauffolgenden Anschaltung des Textgebers an den Teilnehmer-Anschluß (S1, S2) aufweist.

2. Anrufbeantworter nach Anspruch 1, dadurch gekennzeichnet, daß mehrere an verschiedene Teilnehmer-Anschlüsse anschließbare Interface-Baugruppen (3.1-3.16) vorhanden sind, und die Steuervorrichtung (1) einen Speicher zur Speicherung einer vorgegebenen Anzahl eingehender Rufe in Reihenfolge ihres Eintreffens aufweist und die Steuervorrichtung (1) sowie die Interface-Baugruppen (3.1-3.16) mit einer Vorrichtung (4) zur Abgabe einer Endlosansage verbunden sind, wobei die Steuerung so ist, daß bei der Speicherung mehrerer Rufe der Teilnehmer-Anschluß, für den der erste Ruf gespeichert ist, an den Textgeber (2) angeschaltet ist, während die Teilnehmer-Anschlüsse für eine vorgegebene Anzahl der folgenden gespeicherten Rufe an die Vorrichtung (4) zur Abgabe der Endlosansage angeschaltet sind, und nach Beendigung der Ansage des Textgebers (2) dieser an dem Teilnehmer-Anschluß, für den der nächstfolgende Ruf gespeichert ist, angeschaltet wird.

3. Anrufbeantworter nach Anspruch 2, dadurch gekennzeichnet, daß für eine weitere, vorgegebene Zahl von gespeicherten Rufen die Schleife des Teilnehmer-Anschlusses geöffnet bleibt, wobei die Interface-Baugruppen (3.1-3.16) dieser Teilnehmer-Anschlüsse laufend auf das Anliegen des Rufsignals abgefragt werden, und nach Beendigung der Ansage des Textgebers (2) jeweils ein weiterer der Teilnehmer-Anschlüsse, für den ein Ruf gespeichert ist, an die Vorrichtung (4) zur Abgabe der endlosangage angeschaltet wird.

### Claims

1. Automatic telephone responder for private branch exchange installations, said responder emitting at least one predetermined announcement text into the telephone line and comprising a control unit (1) including a microprocessor, and an electronic text transmitter (2) for transmitting text portions which are stored in digital form in set-value memories, whereby one announcement text each is composed of pre-set text portions and variable text portions consisting of digits and being insertable in said pre-set text portions, characterized in that, for a given number of extension stations, said common control unit (1) and said electronic text transmitter (2) as well as at least one interface subassembly (3.1-3.16) adapted to be connected to one each of the subscribers' terminals of said given extension stations, are arranged in the central station of said private branch exchange installation, said interface subassembly (3.1-3.16) being interconnected with said control unit (1) and said text transmitter (2) and comprising devices (V) for advancing one of said variable text portions to said text transmitter (2), as well as devices (R) for the call identification and for the subsequent connection of said text transmitter to said subscriber's terminal (S1, S2).

2. Telephone responder as claimed in claim 1, characterized in that a number of interface subassemblies (3.1-3.16) adapted to be connected to different subscribers' terminals (S1, S2), are provided, that the control unit (1) comprises a memory for the storage of a predetermined number of calls in the sequence of their arrival, that said control unit (1) and said interface subassemblies (3.1-3.16) are connected with a device (4) for emitting an endless announcement, the control being such that upon storage of a number of calls, the subscriber's terminal for which the first call is stored, is connected to the text transmitter (2) while the subscribers' terminals for a given number of the following stored calls are connected to said device (4) for emitting said endless announcement, and that, upon termination of the announcement by said text transmitter (2), the latter is connected to the subscribers's terminal for which the subsequent call is stored.

3. Telephone responder as claimed in claim 2, characterized in that the loop of the subscriber's terminal remains open for a further predetermined number of stored calls, whereby the interface subassemblies (3.1-3.16) of these subscribers' terminals are continuously interrogated for the presence of the call signal, and whereby, upon termination of the announcement text by the text transmitter (2), a further one of said subscribers' terminals for which a call is stored, is connected to the device (4) for emitting the endless announcement.

### Revendications

1. Répondeur automatique pour installations de postes supplémentaires pour la transmission d'au moins un texte d'information préparé d'avance dans la ligne téléphonique et comprenant un dispositif de commande (1) comportant un micro-processeur et un lecteur de textes électronique (2) pour la transmission de parties de textes emmagasinées sous forme digitale dans une mémoire fixe, chaque texte d'information étant constitué chaque fois de parties de textes prédéterminées invariables et de parties de textes variables constituées de chiffres et pouvant être introduites dans les parties de textes prédéterminées invariables, caractérisé en ce que, pour un nombre prédéterminé de postes supplémentaires, le dispositif de commande commun (1) et le lecteur de textes électronique (2) sont prévus dans la centrale des installations des postes supplémentaires ainsi que, au moins, un groupe d'interface pouvant être raccordé chaque fois au poste d'un participant des postes supplémentaires prédéterminés (3.1-3.16) qui est connecté avec le dispositif de commande (1) et le lecteur de textes (2) et des dispositifs (V) pour la transmission des parties de textes variables au lecteur de textes (2) ainsi que des dispositifs (R) pour la reconnaissance des appels et pour le raccordement subséquent du lecteur de textes sur le poste du participant (S1, S2).

2. Répondeur selon revendication 1, caractérisé en ce qu'il existe des groupes d'interface (3.1-3.16) pouvant être raccordés aux différents postes des participants et que le dispositif de commande (1) comprend une mémoire pour l'enregistrement d'un nombre prédéterminé d'appels entrant, dans l'ordre de succession de leur arrivée et que le dispositif de commande (1) ainsi que les groupes d'interface (3.1-3.16) sont connectés à un dispositif (4) pour la transmission d'un message ininterrompu, la commande étant conçue de façon que, en cas d'enregistrement de plusieurs appels pour le poste du participant, le premier appel enregistré est raccordé au lecteur de textes (2) tandis que les postes des participants pour un nombre prédéterminé des appels enregistrés suivants sont raccordés au dispositif (4) pour la transmission d'un message ininterrompu et que, à la fin de la transmission du message du lecteur de textes (2), celui-ci est raccordé au poste de participant pour lequel a été enregistré l'appel suivant.

3. Répondeur selon revendication 2, caractérisé en ce que, pour un nombre supplémentaire prédéterminé d'appels enregistrés, les circuits des postes des participants restent ouverts, les groupes d'interface (3.1-3.16) de ces postes de participants étant interrogés en permanence quant à l'existence d'un signal d'appel et, à la fin de la transmission du message du lecteur de textes (2), le poste des participants suivants pour lequel un appel a été enregistré étant raccordé au dispositif (4) pour la transmission du message ininterrompu.

Endlos-ansage

Text-geber

Teilnehmer - Anschlüsse   N.A.

Steuervorrichtung

var. Textteile: Freigabe

var. Textteile: Daten